# EUROPEAN PATENT APPLICATION

(11) **EP 1 541 591 A1**
(43) Date of publication of application: **15.06.2005**
(21) Application number: 03791360.5
(22) Date of filing: 28.08.2003
(51) Int. Cl.: C08F 2/00, C08F 14/18

(54) **PROCESS FOR PRODUCTION OF FLUOROPOLYMER**

(30) Priority: 28.08.2002 JP 2002248560
(71) Applicant: Daikin Industries, Ltd., Osaka-shi, Osaka 530-8323 (JP)
(72) Inventor: TSUKAMOTO, Mitsuo, c/o DAIKIN INDUSTRIES, LTD., Settsu-shi, Osaka 566-8585 (JP); OTOI, Kenji, c/o DAIKIN INDUSTRIES, LTD., Settsu-shi, Osaka 566-8585 (JP); HIRAGA, Yoshiyuki, c/o DAIKIN INDUSTRIES, LTD., Settsu-shi, Osaka 566-8585 (JP); NAKAYA, Hideki, c/o DAIKIN INDUSTRIES, LTD., Settsu-shi, Osaka 566-8585 (JP); ICHISAKA, Toshiki, c/o DAIKIN INDUSTRIES, LTD., Settsu-shi, Osaka 566-8585 (JP)
(74) Representative: HOFFMANN - EITLE
(86) International application number: PCT/JP2003/010899
(87) International publication number: WO 2004/020476

(57) **Abstract**

A fluoropolymer producing method which comprises polymerizing a radical polymerizable monomer in a manner of continuous polymerization to give the fluoropolymer,
wherein the defined reaction-field is in a supercriticality-expression state and under a pressure of not higher than 40 MPa and a temperature of not higher than that higher by 100°C than the supercriticality-expression temperature of the defined reaction-field,
said radical polymerizable monomer comprises a fluorine-containing ethylenic monomer, and
said fluoropolymer has a weight average molecular weight [Mw] of not lower than 150, 000 as determined on the polystyrene equivalent basis and
a ratio [Mw/Mn] of the weight average molecular weight [Mw] on the polystyrene equivalent basis to a number average molecular weight [Mn] of the fluoropolymer on the polystyrene equivalent basis is higher than 1 but not higher than 3.

## Description

### TECHNICAL FIELD

The present invention relates to a method of producing fluoropolymers.

### BACKGROUND ART

Owing to their excellent chemical resistance, solvent resistance, heat resistance and other characteristics, fluoropolymers are used as raw materials for sealing compounds and like materials to be used under severe conditions in a wide range of industrial fields, for example in the auto, semiconductor and chemical industries.

In the art, fluoropolymers are produced mainly by subjecting fluorolefins to emulsion polymerization in an aqueous medium using a water-soluble initiator or to suspension polymerization using an oil-soluble radical initiator. In these polymerizations, the reaction field is substantially in the inside of the polymer particles formed and/or in the inert solvent hardly affecting the polymerization reaction.

The conventional emulsion polymerization techniques using an aqueous medium generally use a water-soluble initiator. The water-soluble initiator used makes the forming polymer termini ionic and therefore thermally unstable, so that there arises the problem of foaming in the step of molding processing, for instance. In the conventional emulsion polymerization, the aqueous dispersion obtained after reaction is coagulated using a coagulant, followed by dewatering and drying to give a solid polymer. However, this process is long and complicated and the production cannot be made efficiently. This is a problem. Further, the residue of the ionic initiator, if contained in the product, may produce problems when moldings manufactured from such product are used as parts of the equipment for semiconductor production.

In the case of suspension polymerization, there arise problems, namely the polymer formed precipitates out and adheres to the reaction vessel wall, and the polymer yield is deteriorated and the polymer production cost increases accordingly. A further problem of such suspension polymerization is that a long period of washing is required for removing the suspension stabilizer used in the step of polymerization.

In recent years, studies of the use of supercritical fluids, typically carbon dioxide, as reaction fields have been made intensively. Supercritical fluids have good thermal conductivity, are diffused rapidly and are low in viscosity, and these properties are suited for use as reaction medium. A supercritical fluid is a fluid in a region over its critical pressure and temperature.

As regards the polymerization of fluorolefins in a reaction field comprising a supercritical fluid, International Publications WO 01/34667 and WO 01/90206 disclose the radical polymerization reaction of vinylidene fluoride in the manner of continuous polymerization. When these technologies are used, the polymer obtained has a weight average molecular weight of not higher than 100,000 and is composed only of low-molecular-weight species or, even when it has a weight average molecular weight of hundreds of thousands, it shows a multimodal molecular weight distribution with low-molecular-weight species not higher than 100,000 in molecular weight contained therein. Polymers containing such low-molecular-weight species, when molded, cause such problems as decreased strength and fish eye formation.

As examples of the polymerization reaction of a fluorolefin using the monomer itself as the reaction field in a supercritical fluid state, there may be mentioned the copolymerization reaction of tetrafluoroethylene and hexafluoropropylene as described in U.S. Patent No. 3, 062,793, and the copolymerization reaction of tetrafluoroethylene and hexafluoropropylene and the copolymerization reaction of vinylidene fluoride and hexafluoropropylene as described in International Publication WO 96/24624, among others. However, the reaction conditions described in the former specification are severe such that the pressure is not lower than about 200 MPa, and the reaction conditions described in the latter specification are also very severe high-temperature, high-pressure ones such that the pressure is 41-690 MPa and the temperature is 200 to 400°C. Thus, both the processes have a problem in that the equipment cost required for commercial scale production becomes increased.

As a relatively low temperature and low pressure supercritical fluorolefin polymerization technique, International Publication WO 00/47641 discloses the copolymerization reaction of vinylidene fluoride and hexafluoropropylene. This technology, however, gives only low-molecular-weight polymers.

### SUMMARY OF THE PRESENT INVENTION

In view of the above-discussed state of the art, it is an object of the present invention to provide a method of producing fluoropolymers having a high molecular weight and showing a narrow molecular weight distribution.

Thus, the present invention provides a fluoropolymer producing method (I) which comprises polymerizing a radical polymerizable monomer in a manner of continuous polymerization in a defined reaction-field to give the fluoropolymer, wherein said defined reaction-field is in a supercriticality-expression state and under a pressure of not higher than 40 MPa and a temperature of not higher than that higher by 100°C than the supercriticality-expression temperature of the defined reaction-field, said radical polymerizable monomer comprises a fluorine-containing ethylenic monomer, and said fluoropolymer has a weight average molecular weight [Mw] of not lower than 150,000 as determined on the polystyrene equivalent basis and a ratio [Mw/Mn] of the weight average molecular weight [Mw] as determined on the polystyrene equivalent basis to a number average molecular weight [Mn] of the fluoropolymer as determined on the polystyrene equivalent basis is higher than 1 but not higher than 3.

The present invention also provides a fluoropolymer producing method (II) which comprises polymerizing a radical polymerizable monomer in a manner of continuous polymerization in a defined reaction-field in the presence of carbon dioxide to give the fluoropolymer, wherein the defined reaction-field is in a supercriticality-expression state, said radical polymerizable monomer comprises a fluorine-containing ethylenic monomer, said carbon dioxide amounts to at most equimolar to the radical polymerizable monomer, and said fluoropolymer has a weight average molecular weight [Mw] of not lower than 150, 000 as determined on the polystyrene equivalent basis and a ratio [Mw/Mn] of the weight average molecular weight [Mw] as determined on the polystyrene equivalent basis to a number average molecular weight [Mn] as determined on the polystyrene equivalent basis is higher than 1 but not higher than 3.

### BRIEF DESCRIPTION OF THE DRAWINGS

Fig. 1 is a graphic of the molecular weight distribution of the white fluoropolymer A obtained in Example 1.
Fig. 2 is a graphic of the molecular weight distribution of the white fluoropolymer B obtained in Example 2.
Fig. 3 is a graphic of the molecular weight distribution of the white fluoropolymer C obtained in Comparative Example 1.
Fig. 4 is a graphic of the molecular weight distribution of the white fluoropolymer D obtained in Comparative Example 2.
Fig. 5 is a graphic of the molecular weight distribution of the white fluoropolymer E obtained in Example 3.
Fig. 6 is a graphic of the molecular weight distribution of the white fluoropolymer F obtained in Example 4.
Fig. 7 is a graphic of the molecular weight distribution of the white fluoropolymer G obtained in Example 5.

### DETAILED DISCLOSURE OF THE PRESENT INVENTION

In the following, the present invention is described in detail.

The fluoropolymer producing method of the present invention comprises polymerizing a radical polymerizable monomer in a continuous polymerization in a defined reaction-field to give fluoropolymers.

The fluoropolymer producing method of the present invention includes the fluoropolymer producing method (I) and fluoropolymer producing method (II) . These production methods are common in that the polymerization of a radical polymerizable monomer(s) is carried out in a manner of continuous polymerization in a defined reaction-field to give fluoropolymers.

The phrase "fluoropolymer producing method of the present invention" as used herein without attaching (I) or (II) thereto means those two fluoropolymer producing methods collectively, without making any distinction between the fluoropolymer producing method (I) and fluoropolymer producing method (II).

According to the fluoropolymer producing method of the present invention, the polymerization of a radical polymerizable monomer is carried out in a defined reaction-field.

The defined reaction-field is in a supercriticality-expression state.

The term "supercriticality-expression state" as herein means the following state (1) or (2).
(1) In the case of one-component systems, a state in which the pressure and temperature are over the critical pressure Pc^{mono} and critical temperature Tc^{mono} of the radical polymerizable monomer, respectively.
   The "one-component system" so referred to herein means a reaction field in which only one radical polymerizable monomer exists.
(2) In the case of "multicomponent systems", a state ((2)-1) in which the pressure and temperature are respectively over the critical pressure Pc^{mlt-mix} and critical temperature Tc^{mlt-mix} as determined for the mixture of main components occurring in the reaction field as a whole, or a state ((2) -2) in which, for one component a, arbitrarily selected from among the main components occurring in the reaction field, the partial pressure P^{mlt-a} of a in the reaction field is over the critical pressure Pc^{mlt-a} for the case of a singly existing and the temperature T of the reaction field is over the critical temperature Tc^{mlt-a} for the case of a singly existing.

The term "multicomponent system" as used herein means a reaction field in which at least one radical polymerizable monomer exists and at least one component belonging to the main components exists in addition to the at least one radical polymerizable monomer. In such a multicomponent system, there may exist two or more radical polymerizable monomer species.

The above-mentioned main components comprise the above-mentioned radical polymerizable monomer(s), and a nonethylenic fluorocarbon, which is to be used where desired, as mentioned later herein, and carbon dioxide. As for the counting of the main component species, if, for example, there are two radical polymerizable monomer species and any nonethylenic fluorocarbon and carbon dioxide are substantially absent, the main components are counted as 2 species.

The state (1) and the state ((2)-1) as defined herein each is a supercritical state. The state ((2)-2) as defined herein is a pseudo-supercritical state for the whole multicomponent system.

In the present specification, any state that does not corresponds to the state (1) or state (2) does not correspond to a supercriticality-expression state.

If, in a multicomponent system, the pressure of the multicomponent system as a whole is over that critical pressure Pc(m) of an arbitrarily selected one main component (hereinafter, "component m") contained in the reaction field which the component m has if it exists singly in the reaction field but lower than the critical pressure Pc^{mlt-mix} determined for the mixture of the main components as a whole and the temperature of the multicomponent system as a whole is over that critical temperature Tc (n) of an arbitrarily selected one main component n (hereinafter, "component n") other than the component m which the component n has if it exists singly but lower than the critical temperature Tc^{mlt-mix} determined for the mixture of the main components as a whole, such a state does not correspond to the above-defined supercriticality-expression state. Thus, when vinylidene fluoride (VdF; critical pressure when it exists singly [Pc^{mono}] = 4.430 MPa; critical temperature when it exists singly [Tc^{mono}] = 30.15°C) and hexafluoropropylene (HFP; Pc^{mono} = 2.900 MPa; Tc^{mono} = 93.95°C) are used as two radical polymerizable monomers, a state in which the pressure is over the critical pressure of HFP, namely 2.900 MPa and the temperature is over the critical temperature of VdF, namely 30.15°C but the pressure and temperature are respectively below the critical pressure Pc^{mlt-mix} and critical temperature Tc^{mlt-mix} determined for the mixture of VdF and HFP as a whole does not correspond to the above-defined supercriticality-expression state.

In the present specification, the term "supercriticality-expression pressure" is used for referring to the above-mentioned critical pressure Pc^{mono}, the above-mentioned critical pressure Pc^{mlt-mix} and the above-mentioned critical pressure Pc^{mlt-a}, without making any particular distinction among them, and the term "supercriticality-expression temperature" is used for referring to the above-mentioned critical temperature TC^{mono}, the above-mentioned critical temperature Tc^{mlt-mix} and the above-mentioned critical temperature Tc^{mlt-a}, without making any particular distinction among them. The above-mentioned supercriticality-expression state may also be said to be a state in which the pressure and temperature are above-mentioned the supercriticality-expression pressure and supercriticality-expression temperature, respectively.

In the above-mentioned defined reaction-field, there may be one or more substances other than the main components.

The substances other than the main components are not particularly restricted but include, among others, radical polymerization initiators, diluents for the radical polymerization initiators, and chain transfer agents. The substances other than the main components are minor constituents. The minor constituents occur in minute amounts, so that their effects on the supercriticality-expression pressure or supercriticality-expression temperature in the reaction field can be neglected; they are regarded as exerting any influences on the supercriticality-expression pressure or supercriticality-expression temperature in the fluoropolymer producing method of the present invention.

As for the product fluoropolymers, they are generally not dissolved but precipitate out, so that they will not influence the supercriticality-expression pressure or supercriticality-expression temperature.

The reaction field in which the fluoropolymer producing method of the present invention is not particularly restricted but depends on the supercriticality-expression forming conditions. From the viewpoint of improved energy efficiency and reduced equipment cost, it is desirable to employ a state close to the supercriticality-expression pressure and close to the supercriticality-expression temperature among states over the supercriticality-expression pressure and supercriticality-expression temperature.

The lower limit to the pressure in the defined reaction-field in carrying out the fluoropolymer producing method of the present invention is a pressure over the supercriticality-expression pressure, as is clear from the above description about the supercriticality-expression state. So long as it exceeds the supercriticality-expression pressure, the pressure in the defined reaction-field is not particularly restricted but may be selected considering the critical pressure of one of the typical radical polymerizable monomers to be mentioned later herein. A preferred lower limit, however, is 2 MPa, and a more preferred lower limit is 4 MPa.

As is clear from the above-given description of the supercriticality-expression state, the lower limit to the temperature in the defined reaction-field in carrying out the fluoropolymer producing method of the present invention is a temperature exceeding the supercriticality-expression temperature. So long as it is over the supercriticality-expression temperature, the temperature in the defined reaction-field is not particularly restricted but may be selected considering the critical temperature of one of the typical radical polymerizable monomers mentioned later herein and other factors. As the temperature increases, however, the polymerization in the supercritical solvent becomes predominant as compared with the polymerization within the forming fluoropolymer particles, with the result that the yield of lower-molecular-weight fluoropolymer molecules increases and the molecular weight distribution may become bimodal in certain instances.

When VdF alone is used as the radical polymerizable monomer, the reaction temperature is more preferably 31°C, since the lower limit to the temperature in the defined reaction-field is 30.15°C, which is the critical temperature of VdF, and the reaction field can then be maintained in a supercriticality-expression state stably.

In the fluoropolymer producing method (I) of the present invention, the defined reaction-field is in the above-mentioned supercriticality-expression state and, further, in a state in which the pressure is not higher than 40 MPa and the temperature is not higher than the temperature higher by 100°C than the supercriticality-expression temperature of the defined reaction-field. From the production cost viewpoint, the pressure is preferably not higher than 10 MPa, and the temperature is preferably not higher than the temperature higher by 50°C than the supercriticality-expression temperature of the defined reaction-field, more preferably not higher than the temperature higher by 30°C than the supercriticality-expression temperature of the defined reaction-field, and still more preferably not higher than the temperature higher by 15°C than the supercriticality-expression temperature of the defined reaction-field in view of the fact that the radical polymerizable monomer used is hardly liquefied and from the operability viewpoint.

When the fluoropolymer producing method of the present invention is carried out in a multicomponent system, the critical pressure Pc^{mlt-mix} and critical temperature Tc^{mlt-mix} may fluctuate up above or down below the critical pressure Pc^{mlt-a} and critical temperature Tc^{mlt-a}, respectively. In the practice of the present invention, however, it is only necessary that the actual reaction field be at above the supercriticality-expression pressure and above supercriticality-expression temperature.

Whether the reaction field is in a supercriticality-expression state or not according to the definition made herein referring to the fluoropolymer producing method of the present invention can be judged by measuring the state of saturation and the relations among pressure, density and temperature (PTV measurement) of the system which is the target of measurements. If the actually measured values are difficult to obtain, estimated values ["Kagaku Binran Kiso-hen (Handbook of Chemistry; Fundamentals Section), 5th revised edition", edited by the Chemical Society of Japan, page 6, published by Maruzen Co. (March 15, 1997)] can be used as alternatives.

As a method of creating a reaction field in a supercriticality-expression state, there may be mentioned, for example, the method which comprises continuously introducing the above-mentioned radical polymerizable monomer, if necessary together with a nonethyenic fluorocarbon and/or carbon dioxide, into a reaction vessel the inside of which is adjusted to a pressure above the supercriticality-expression pressure and a temperature above the supercriticality-expression temperature.

The fluoropolymer obtained by the fluoropolymer producing method of the present invention has a weight average molecular weight [Mw] of not lower than 150,000 on the polystyrene equivalent basis, and has a ratio [Mw/Mn] between the weight average molecular weight [Mw] on the polystyrene equivalent basis and the number average molecular weight [Mn] on the polystyrene equivalent basis of higher than 1 but not higher than 3. When the Mw is lower than 150,000, the finally obtained moldings will be poor in mechanical strength, in particular in wear resistance. When the ratio Mw/Mn is higher than 3, poor mechanical properties, such as poor shock resistance, and poor moldability will result. A preferred lower limit to the above-mentioned ratio Mw/Mn is 1.5.

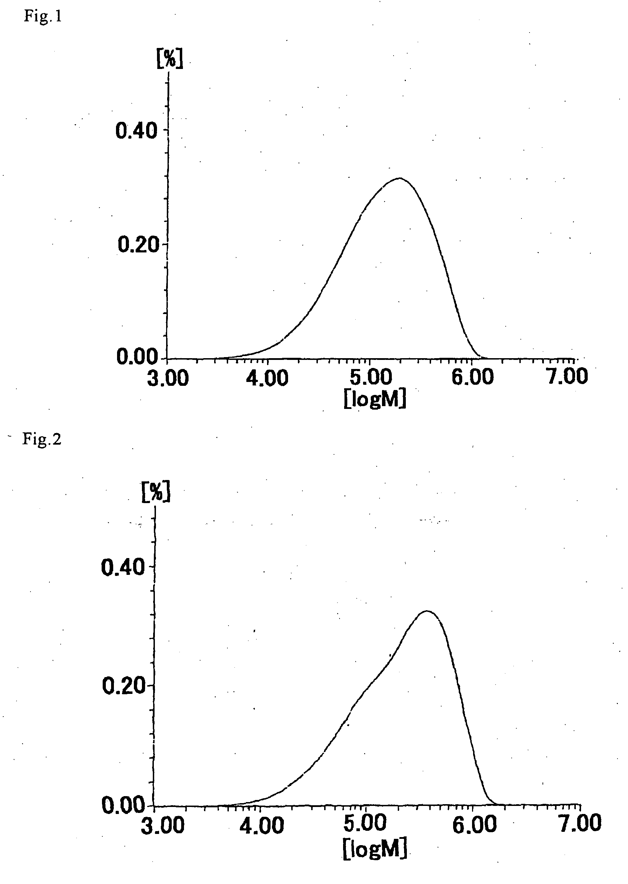

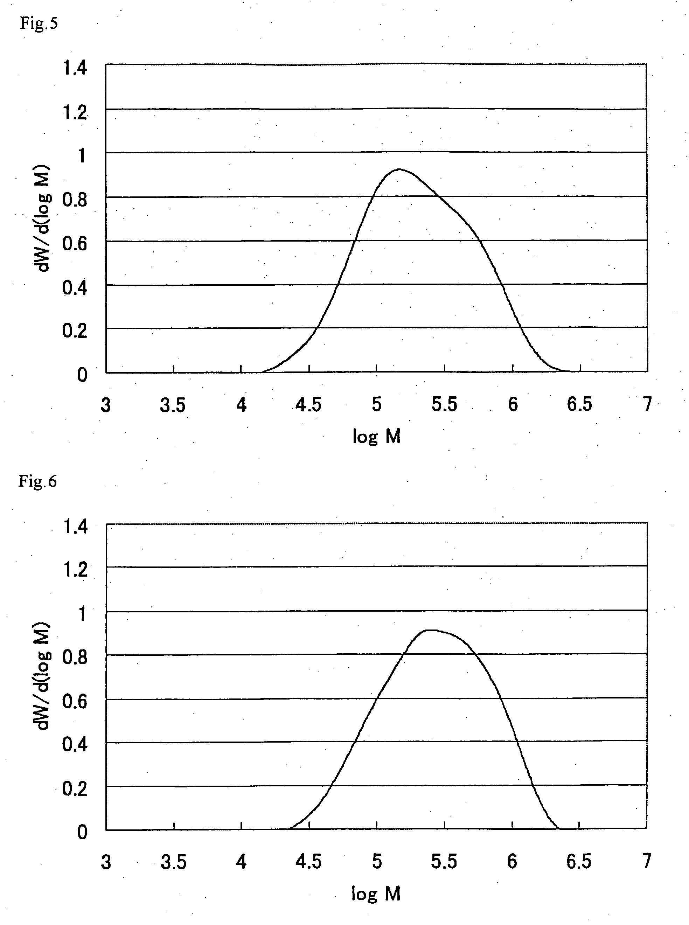

When its Mw and Mw/Mn are within the above respective ranges, the above fluoropolymer generally gives a unimodal molecular weight distribution having one peak in a high molecular weight region such as the distributions shown in Fig 1 or Fig. 5, for instance. The fluoropolymers obtained by polymerizing a radical polymerizable monomer(s) in a supercriticality-expression state in the conventional manner give bimodal molecular weight distribution patterns each having two peaks. The polymerization of radical polymerizable monomers presumably proceeds in two fields of polymerization, namely within the fluoropolymer particles formed (hereinafter referred to as "polymerization field (P)") and in the above-mentioned defined reaction-field (hereinafter referred to as "polymerization field (Q) ") free of the above-mentioned polymerization field (P) . The polymer molecules formed in the polymerization field (P) in the product fluoropolymers tend to become relatively high in molecular weight, and the polymer molecules formed in the polymerization field (Q) tend to become relatively low in molecular weight. The bimodal molecular weight distribution patterns found in the conventional art are considered to be representing a higher molecular weight side peak (P') due to the polymer molecules formed in the polymerization field (P) and a lower molecular weight side peak (Q') due to the polymer molecules formed in the polymerization field (Q). In the conventional art, there are two polymerization fields, so that it is difficult to attain a unimodal molecular weight distribution; it is of course difficult to obtain a unimodal molecular weight distribution in a high molecular weight region. On the contrary, the fluoropolymer producing method of the present invention, according to which the polymerization of a radical polymerizable monomer(s) is carried out in a supercriticality-expression state, can give fluoropolymers showing a molecular weight distribution which is unimodal and, moreover, in a high molecular weight region.

For obtaining a fluoropolymer whose Mw and Mw/Mn values are within the respective ranges defined hereinabove by the fluoropolymer producing method of the present invention, it is at least necessary to carry out the polymerization of the radical polymerizable monomer(s) in the above-defined supercriticality-expression state in a continuous polymerization.

In carrying out the fluoropolymer producing method of the present invention, the polymerization of a radical polymerizable monomer(s) is carried out while monomer gas is introduced.

In the above-mentioned defined reaction-field, the ratio of monomer density (hereinafter, ρₘ) to monomer critical density (hereinafter, ρ₀), namely the ratio (hereinafter, ρₘ/ρ₀), is preferably not lower than 1.1. When the ratio ρᵣ is lower than 1.1, the rate of polymerization is low and the productivity thus becomes markedly decreased and, in certain instances, the Mw and Mw/Mn of the product fluoropolymer may not fall within the respective ranges given hereinabove but a bimodal molecular weight distribution may readily result. A preferred upper limit to ρᵣ is 1.8, a more preferred upper limit is 1.7, and a still more preferred upper limit is 1.6. The reason why ρᵣ values lower than 1.1 tend to lead to bimodal distributions is presumably that the low molecular weight side peak (Q') tends to further shift to the lower molecular weight side and, even if the fluoropolymer quantity in a steady-state reactor is increased, as described later herein, to thereby heighten the peak (P') on the high-molecular-weight side, it is impossible for the peak (P') to absorb the peak (Q') to give a unimodal pattern.

The monomer critical density ρ₀ in the fluoropolymer producing method of the present invention means the monomer density at the supercriticality-expression temperature and supercriticality-expression pressure. The monomer density is the density of the radical polymerizable monomer, and the radical polymerizable monomer, before introduction thereof into the reactor, generally occurs as a gas at ordinary temperature of about 25 to 30°C. In cases where the radical polymerizable monomer comprises two or more species, the monomer density is the sum of the densities of the individual radical polymerizable monomers. The lower limit to po is preferably set at 0.3 g/ml.

The above-mentioned monomer density is determined by dividing the mass of the radical polymerizable monomer introduced into the reactor by the volume of the reactor.

In carrying out the fluoropolymer producing method of the present invention, the polymerization of a radical polymerizable monomer(s) is preferably carried out in the presence of a chain transfer agent. By adding a chain transfer agent, it becomes possible to obtain fluoropolymers having an Mw and Mw/Mn within the above-given respective ranges with a unimodal molecular weight distribution in a high molecular weight region, although other polymerization conditions may also be influential. The reason why a unimodal molecular weight distribution in a high molecular weight region can be obtained is presumably that the chain transfer agent can contribute to shifting of the high molecular weight side peak (P') alone to the lower molecular weight side without substantially influencing the position of the low molecular weight side peak (Q'). As the chain transfer agent, there may be mentioned, among others, hydrocarbons, halogenated hydrocarbons and, further, hydrocarbyl alcohols, hydrocarbyl esters, hydrocarbyl ketones, and mercaptans. As the hydrocarbons, there may be mentioned hydrocarbons containing 4 to 6 carbon atoms, such as pentane, butane and hexane. As the halogenated hydrocarbons, there may be mentioned tetrachloromethane, chloroform, and methylene chloride. Those halogenated hydrocarbons are to be distinguished from the above-mentioned nonethylenic fluorocarbons which have no substantial chain transfer agent activity.

As the hydrocarbyl alcohols, there may be mentioned, among others, methanol, ethanol, and isopropanol.

As the hydrocarbyl esters, there may be mentioned, among others, methyl acetate, ethyl acetate, butyl acetate, ethyl propionate, ethyl acetoacetate, dimethyl malonate, diethyl malonate, dimethyl succinate, diethyl succinate, and diethyl carbonate.

As the hydrocarbyl ketones, there may be mentioned acetone, acetylacetone, and cyclohexanone.

As the mercaptans, there may be mentioned, for example, dodecylmercaptan and the like.

Among those chain transfer agents mentioned above, pentane, butane, isopropanol, diethyl malonate, tetrachloromethane, acetone, dodecylmercaptan and diethyl carbonate are preferred since they can cause marked decreases in molecular weight at low addition levels. Carbonyl group-containing ones, such as acetone, diethyl malonate and diethyl carbonate, are more preferred since they are particularly excellent in affinity for fluids in a supercriticality-expression state and can efficiently cause the high molecular weight side peak (P') to shift to the low molecular weight side. Acetone and diethyl carbonate are still more preferred since they cause the high molecular weight side peak (P') to the low molecular weight side but hardly cause shifting of the low molecular weight side peak (Q') to the lower molecular weight side.

The level of addition of the chain transfer agent can be adequately selected according to the molecular weight desired of the fluoropolymer. Generally, however, that level is preferably 0.001 to 5% by mass relative to the total amount of the radical polymerizable monomer (s) . A more preferred upper limit is 2% by mass.

The fluoropolymer producing method of the present invention is characterized in that the polymerization of the radical polymerizable monomer (s) is carried out in the manner of continuous polymerization.

The continuous polymerization is the mode of polymerization in which the radical polymerizable monomer is fed to the reaction field continuously and the fluoropolymer formed is discharged therefrom continuously.

The above continuous polymerization is preferably carried out in a steady state in a manner such that the fluoropolymer in the reaction vessel may amount to at least 8 g per liter of the capacity of the reaction vessel, although the amount of the fluoropolymer may be varied according to other reaction conditions. By increasing the amount of the fluoropolymer in the reaction vessel, it becomes possible to promote the reaction in the polymerization field (P) and enlarge the high molecular weight side peak (P') favorably for the production of high-molecular-weight fluoropolymers. When the above-mentioned amount of the fluoropolymer is within the above range, the upper limit may be set at 100 g per liter of the capacity of the reaction vessel in a steady state, for instance, from the productivity viewpoint.

The steady state mentioned above is a state in which the fluoropolymer amount in the reaction vessel remains constant. In such steady state, the fluoropolymer amount in the reaction vessel is equal to the amount of the fluoropolymer discharged from the reaction vessel per residence time.

The above-mentioned amount of the fluoropolymer in the reaction vessel is the value calculated by converting the amount of the fluoropolymer discharged from the reaction vessel per residence time at the above-mentioned steady state to the amount per liter of the capacity of the reaction vessel.

The residence time is the time required for the whole amount (W g) of the radical polymerizable monomer fed in the manner of continuous polymerization as found in the reaction vessel at an arbitrary time, on the assumption that it is not consumed at all for the polymerization, to be replaced by W g of the radical polymerizable monomer newly fed to this reaction vessel. As a matter of fact, the residence time can be calculated from the capacity of the reaction vessel and the density of the radical polymerizable monomer fed to the reaction vessel and the rate of feeding (rate of flow) of the monomer. The residence time is preferably 0.01 to 5 hours. A more preferred lower limit is 0.1 hour, and a more preferred upper limit is 2 hours.

When the fluoropolymer amount is smaller than 8 g per liter of the capacity of the reaction vessel at a steady state, the size of the high molecular weight side peak (P') generally becomes insufficient. The use of a chain transfer agent, however, makes it possible to obtain an Mn and an Mw/Mn within the above-mentioned respective ranges and thereby obtain a unimodal molecular weight distribution. The reason why a unimodal molecular weight distribution can be obtained even when the fluoropolymer amount per liter of the capacity of the reaction vessel is smaller than 8 g in a steady state is presumably that the high molecular weight side peak (P') can be shifted to the low molecular weight side by using a chain transfer agent, so that the peak (P') appears to have been absorbed by the low molecular weight side peak (Q'). It is to be noted that, for obtaining an Mw and an Mw/Mn in the above-mentioned respective ranges, it is not always necessary that the reaction condition that the fluoropolymer amount per liter of the capacity of the reaction vessel should be not smaller than 8 g in a steady state be satisfied. For example, when a chain transfer agent is used, it is possible to obtain an Mw and Mw/Mn in the above respective ranges without satisfying that reaction condition.

The radical polymerizable monomer mentioned above comprises a fluorine-containing ethylenic monomer. Employable as the radical polymerizable monomer are:
(i) one fluorine-containing ethylenic monomer,
(ii) a mixture of two or more fluorine-containing ethylenic monomers,
(iii) a mixture of one fluorine-containing ethylenic monomer and one or more fluorine-free ethylenic monomers, and
(iv) a mixture of two or more fluorine-containing ethylenic monomers and one or more fluorine-free ethylenic monomers.

As the fluorine-containing ethylenic monomer(s), there may be mentioned perfluoroethylenic monomers such as tetrafluoroethylene [TFE], hexafluoropropylene [HFP], perfluoro(alkylvinylether) [PAVE] species, 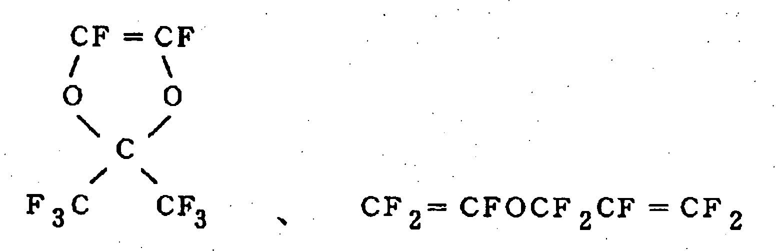 ; hydrogen-containing fluoroethylenic monomers such as vinylidene fluoride [VdF], trifluoroethylene, vinyl fluoride, trifluoropropene, pentafluoropropylene, tetrafluoropropylene, and hexafluoroisobutene; and chlorine-containing fluoroethylenic monomers such as chlorotrifluoroethylene [CTFE], among others. As the PAVE species, there may be mentioned perfluoro(methyl vinyl ether) [PMVE], perfluoro(ethylvinylether) [PEVE], and perfluoro(propylvinylether) [PPVE], among others.

The fluorine-containing ethylenic monomer preferably comprises at least one species selected from the group consisting of VdF, TFE, CTFE and HFP.

The fluorine-containing ethylenic monomer preferably comprises VdF, since this monomer can readily attain a supercriticality-expression state at a relatively low temperature and a relatively low pressure and has no autopolymerizing properties. From the viewpoint of improved extrudability of the product fluoropolymer on the occasion of extrusion molding, it is desirable that the fluorine-containing ethylenic monomer comprise VdF and at least one species selected from among TFE, HFP and CTFE.

It is also possible to use a functional group-containing fluorolefin as the fluorine-containing ethylenic monomer. The functional group-containing fluorolefin is not particularly restricted but includes, among others, compounds represented by the following general formula: 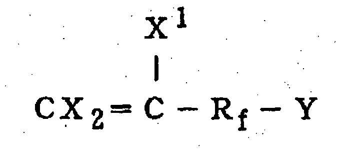 (In the above formula, Y represents -CH₂OH, -COOH, -SO₂F, -SO₃M (M being a hydrogen atom, NH₄ or an alkali metal), a carboxyl group in a salt form, an alkoxycarbonyl group, an epoxy group or a nitrile group, X¹ and X² may be the same or different and each represents a hydrogen atom or a fluorine atom, and Rf represents a fluorine-containing alkylene group containing 1 to 40 carbon atoms or a fluorine-containing, ether bond-containing alkylene group containing 1 to 40 carbon atoms.) As specific examples, there may be mentioned:

CH₂=CHCF₂CF₂CH₂CH₂COOH,

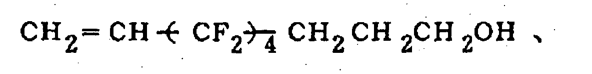

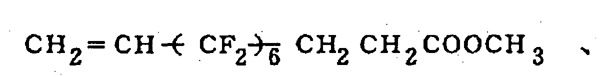

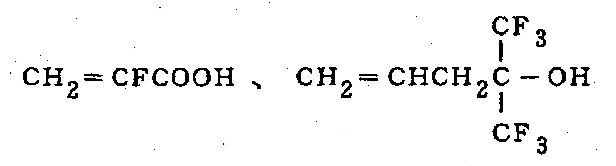

CF₂=CFOCF₂CF₂CH₂OH, CF₂=CFO (CF₂)₃ COOH,

CF₂=CFOCF₂CF₂COOCH₃,

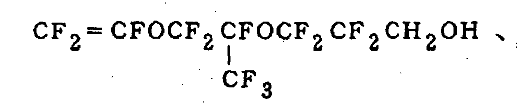

CF₂=CFCF₂COOH,

CF₂=CFCF₂CH₂OH,

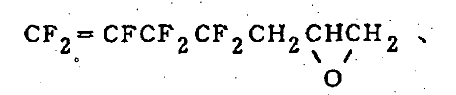

CF₂=CFCF₂OCF₂CF₂CF₂COOH,

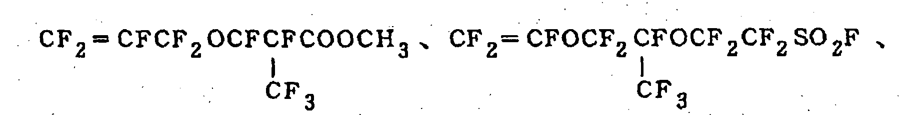

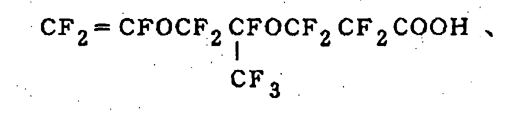

CF₂=CFOCF₂CF₂SO₂F,

CF₂=CFCF₂CF₂COOH, CF₂=CFCF₂COOH,

CH₂=CFCF₂CF₂CH₂CH₂OH, CH₂=CFCF₂CF₂COOH,

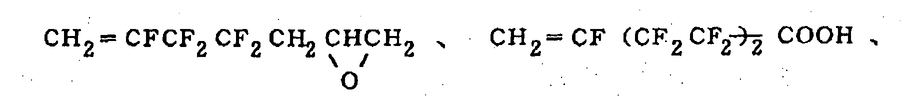

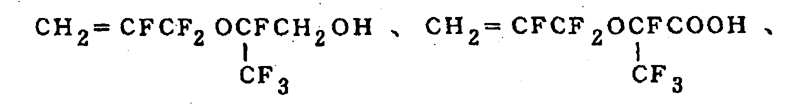

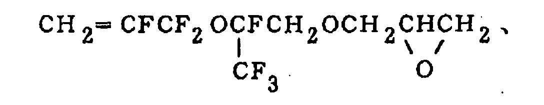

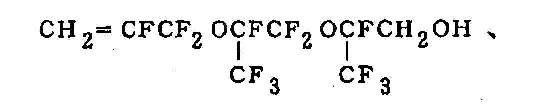

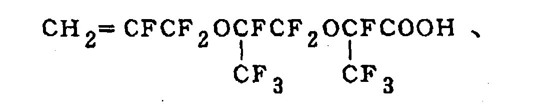

It is also possible to use, as the fluorine-containing ethylenic monomer, those fluorolefin monomers which are disclosed in Japanese Kokoku Publication Hei-05-63482 and Japanese Kokai Publication Sho-62-12734, for example perfluoro(6,6-dihydro-6-iodo-3-oxa-1-hexene) and perfluoro(5-iodo-3-oxa-1-pentene).

The fluorine-free ethylenic monomer is not particularly restricted but includes, among others, α-olefin monomers containing 2 to 10 carbon atoms, for example ethylene [ET], propylene, butene and pentene; and alkyl vinyl ethers whose alkyl moiety contains 1 to 20 carbon atoms, for example methyl vinyl ether, ethyl vinyl ether, propyl vinyl ether, cyclohexyl vinyl ether, hydroxybutyl vinyl ether and butyl vinyl ether.

The following combinations of radical polymerizable monomers are particularly suited for the polymerization in a reaction field in a supercriticality-expression state:
(a) Homopolymerization of one of VdF, TFE, CTFE, etc;
(b) Copolymerization of VdF and HFP (mole ratio 50-99/1-50) ;
(c) Copolymerization of VdF, HFP and TFE (mole ratio 50-90/1-40/1-40);
(d) Copolymerization of HFP and ET (mole ratio 1-50/50-99) ;
(e) Copolymerization of HFP, ET and TFE (mole ratio 1-50/40-98/1-45);
(f) Copolymerization of PAVE and TFE (mole ratio 1-50/50-99) ;
(g) Copolymerization of TFE and HFP (mole ratio 50-99/1-50);
(h) Copolymerization of TFE and ET (mole ratio 1-99/1-99);
(i) Copolymerization of TFE and propylene (mole ratio 1-99/1-99);
(j) Copolymerization of VdF and TFE (mole ratio 1-99/1-99) ;
(k) Copolymerization of VdF and CTFE (mole ratio 1-99/1-99) ;
(l) Copolymerization of VdF, CTFE and TFE (mole ratio 50-98/1-30/1-30)
(m) Copolymerization of TFE, VdF and propylene (mole ratio 30-98/1-50/1-50);
(n) Copolymerization of ET, HFP and VdF (mole ratio 10-85/10-45/1-45); and
(o) Copolymerization of ET, HFP, VdF and TFE (mole ratio 10-85/10-45/1-45/1-30).

The polymerization of the above radical polymerizable monomer is preferably carried out in the presence of a nonethylenic fluorocarbon. Preferred as the nonethylenic fluorocarbon are chain or cyclic saturated fluorocarbons containing 1 to 5 carbon atoms. As such fluorocarbons, there may be mentioned, for example, hydrogen-containing nonethylenic fluorocarbons such as difluoromethane, trifluoromethane (critical temperature [Tc] = 25.82°C), trifluoroethane (Tc = 72.6°C), tetrafluoroethane (Tc = 101.03°C) and pentafluoroethane; and nonethylenic perfluorocarbons such as tetrafluoromethane (CF₄; Tc = -45.64°C), perfluoroethane (C₂F₆; Tc = 19.88°C) and perfluorocyclobutane (Tc = 115.22°C). The above nonethylenic fluorocarbons each acts as a diluent for the radical polymerizable monomer(s) and serves to absorb and remove the heat of reaction in the reaction field. Further, they can increase the solubility of the radical polymerization initiator and the stability of the forming fluoropolymer particles in the reaction field and can prevent the particles from adhesion to one another as a result of swelling.

The nonethylenic fluorocarbon is preferably one whose critical temperature Tc^{mlt-a} for its single occurrence is lower than the critical temperature of one or more radical polymerizable monomers, since such one lowers the supercriticality-expression temperature and thus increases the energy efficiency in the above-mentioned defined reaction-field. As the nonethylenic fluorocarbons having such a critical temperature Tc^{mlt-a}, those nonethylenic fluorocarbons enumerated above are preferred, and tetrafluoromethane and perfluoroethane are more preferred and, for lowering the supercriticality-expression temperature, the use of carbon dioxide, which is to be described later herein, is preferably avoided.

When a nonethylenic fluorocarbon is used, it is preferably used in an amount of 1 to 500% by mass based on the whole amount of the radical polymerizable monomer(s). Excessive levels are unfavorable since the amount of the nonethylenic fluorocarbon to be recovered increases, the amount of the radical polymerization initiator in the nonethylenic fluorocarbon increases and/or the yield of fluoropolymer molecules low in molecular weight increases. A more preferred upper limit is 300% by mass, and a still more preferred upper limit is 200% by mass.

The fluoropolymer producing method (II) of the present invention is characterized in that the polymerization of the above-mentioned radical polymerizable monomer(s) in the defined reaction-field is carried out in the presence of carbon dioxide. Like the nonethylenic fluorocarbons mentioned above, carbon dioxide acts as a diluent for the radical polymerizable monomer (s) in the reaction field and serves to remove the heat of reaction and, further, can increase the solubility of the radical polymerization initiator in the reaction field and the stability of fluoropolymer particles formed and can prevent the particles from adhesion to one another as a result of swelling.

The defined reaction-field in the fluoropolymer producing method (II) of the present invention is a supercriticality-expression state, as mentioned hereinabove referring to the fluoropolymer producing method of the present invention.

The amount of carbon dioxide to be present is not greater than the level equimolar to the above-mentioned radical polymerizable monomer (s). Levels exceeding the equimolar one are undesirable since they cause increases in the yield of fluoropolymer molecules low in molecular weight. A preferred upper limit to the amount of carbon dioxide is 50% of the total number of moles of carbon dioxide and the above-mentioned radical polymerizable monomer (s), a more preferred upper limit is 30%, and a still more preferred upper limit is 10%. When the amount of carbon dioxide is within the above range, it is generally possible to increase the solubility of the radical polymerization initiator and the stability of fluoropolymer particles formed and prevent the particles from adhering to one another as a result of swelling, even when the amount is 1% or higher relative to the total number of moles of carbon dioxide and the radical polymerizable monomer(s).

When carbon dioxide is present in the reaction field, the monomer density lowers and the fluoropolymer formed tends to show a decreased degree of polymerization. Therefore, it is necessary to use carbon dioxide considering the desired Mw of the fluoropolymer and, further, considering the solubility of the radical polymerization initiator in the reaction field.

When the polymerization of a radical polymerizable monomer (s) is carried out in the presence of carbon dioxide in accordance with the fluoropolymer producing method (II) of the present invention, the solubility of the radical polymerization initiator in the reaction field, for instance, can be improved and, further, fluoropolymers having an Mw and an Mw/Mn within the above-mentioned respective ranges can be obtained by selecting a relatively high temperature in the defined reaction-field. That temperature may be higher, for example, by 100°C than the supercriticality-expression temperature. For obtaining fluoropolymers having a unimodal molecular weight distribution, the temperature range is preferably not higher than the temperature higher by 100°C than the supercriticality-expression temperature. At temperatures exceeding the temperature higher by 100°C than the supercriticality-expression temperature, the molecular weight distribution of the fluoropolymer obtained may become bimodal in some cases. The above temperature is more preferably not higher than the temperature higher by 50°C than the supercriticality-expression temperature of the above-mentioned defined reaction-field, still more preferably not higher than the temperature higher by 30°C than the supercriticality-expression temperature of the above-mentioned defined reaction-field. Most preferably, that temperature is not higher than the temperature higher by 15°C than the supercriticality-expression temperature of the above-mentioned defined reaction-field in view of the fact that, at such temperature, the liquefaction of the radical polymerizable monomer (s) hardly occurs and from the operational procedure viewpoint.

In carrying out the fluoropolymer producing method (II) of the present invention, the pressure in the defined reaction-field is preferably not higher than 40 MPa although it tends to become higher as compared with the case where the radical polymerizable monomer polymerization is carried out in the absence of carbon dioxide due to the contribution of the carbon dioxide partial pressure.

The fluoropolymer producing method (I) of the present invention can give fluoropolymers having an Mw and an Mw/Mn within the above-mentioned respective ranges while suppressing the pressure in the defined reaction-field to a level not higher than 40 MPa and the temperature to a level not higher than the temperature higher by 100°C than the supercriticality-expression temperature.

In the fluoropolymer producing method of the present invention, the polymerization of the above-mentioned radical polymerizable monomer(s) is preferably carried out in the presence of a radical polymerization initiator. Employable as the radical polymerization initiator are peroxides, such as organic peroxides and inorganic peroxides, and azo compounds, among others.

The radical polymerization initiator may have chain transfer activity or have no chain transfer activity.

When one having no chain transfer activity is used as the radical polymerization initiator, as compared with the case of using a chain transfer agent, the molecular weight distribution of the fluoropolymer obtained without using any chain transfer agent tends to become bimodal with a enlarged high molecular weight side peak (P') but with the low molecular weight side peak (Q') not being much changed. By causing a chain transfer agent to be present, it is possible to reduce the high molecular weight side peak (P') to thereby render the distribution unimodal.

When the radical polymerization initiator used has chain transfer activity and a chain transfer agent is additionally used, fluoropolymers having an Mw and an Mw/Mn within the respective ranges given above and having a unimodal molecular weight distribution can be obtained with ease by increasing the amount of the fluoropolymer in the reaction vessel in a steady state to a level within the range mentioned above. The reason why a unimodal molecular weight distribution can be obtained is presumably that while the high molecular weight side peak (P') and low molecular weight side peak (Q') tend to be small due to the chain transfer activity, the high molecular weight side peak (P') can be increased by increasing the fluoropolymer amount in the reaction vessel in a steady state to a level within the range mentioned above, with the result that it seemingly has absorbed the low molecular weight side peak (Q').

The organic peroxide having no chain transfer activity is not particularly restricted but includes, among others, linear perfluoro diacyl peroxide represented by the general formula (CₘF₂ₘ₊₁COO-)₂ (m representing an integer of 1 to 5), for example perfluoropropionyl peroxide and perfluorobutyryl peroxide; bis[2,2'-(perfluoropropoxyoxyalkylenepropionyl)] peroxides represented by the following general formula: 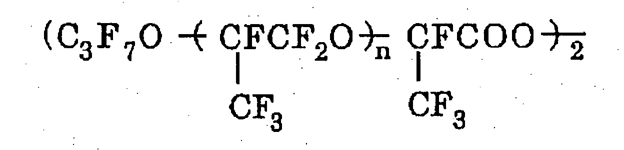 (n representing an integer of 0 to 2), for example perfluoro(2-normalpropoxypropionyl) peroxide; and fluorine-based diacyl peroxides such as bis(ω-hydrododecafluoroheptanoyl) peroxide [DHP].

The organic peroxide having chain transfer activity is not particularly restricted but includes, among others, fluorine-free diacyl peroxides, such as isobutyryl peroxide, 3,5,5-trimethylhexanoyl peroxide, octanoyl peroxide, lauroyl peroxide, stearoyl peroxide and succinic acid peroxide; peroxydicarbonates, such as dinormalpropyl peroxydicarbonate, diisopropyl peroxydicarbonate, bis(4-tert-butylcyclohexyl) peroxydicarbonate, di-2-ethoxyethyl peroxydicarbonate, di-2-ethylhexyl peroxydicarbonate, di-2-methoxybutyl peroxydicarbonate, and diethyl peroxydicarbonate; and peroxy esters, such as 1,1,3,3-tetramethylbutyl peroxyneodecanoate, 1-cyclohexyl-1-methylethyl peroxyneodecanoate, tert-hexyl peroxyneodecanoate, tert-butyl peroxyneodecanoate, tert-hexyl peroxypivalate, tert-butyl peroxypivalate, 1,1,3,3-tetramethylbutyl peroxy-2-ethylhexanoate, 2,5-dimethyl-2,5-bis(2-ethylhexanoylperoxy)hexane, 1-cyclohexyl-1-methylethyl peroxy-2-ethylhexanoate, tert-hexyl peroxy-2-ethylhexanoate, tert-butyl peroxy-2-ethylhexanoate, tert-butyl peroxyisobutyrate, tert-hexyl peroxyisopropyl monocarbonate, tert-butylperoxy 3,5,5-trimethylhexanoate, tert-butyl peroxylaurate, tert-butyl peroxyisopropyl monocarbonate, tert-butylperoxy 2-ethylhexyl monocarbonate, and tert-butyl peroxyacetate.

The inorganic peroxide is not particularly restricted but may be, for example, hydrogen peroxide or a persulfate salt.

The persulfate salt is not particularly restricted but includes, among others, ammonium persulfate, sodium persulfate and potassium persulfate.

In the case of the above-mentioned peroxide, it is also possible to use the same in combination with a reducing agent.

The azo compound is not particularly restricted but includes, among others, cyano-2-propylazoformamide, 1,1'-azobis(cyclohexane-1-carbonitrile), 2,2'-azobis(2-amidinopropane) dihydrochloride, 2,2'-azobis(2-methylbutyronitrile), 2,2'-azobisisobutyronitrile, 2,2'-azobis(2,4-dimethylvaleronitrile), 2,2'-azobis[N-(2-propenyl)-2-methylpropionamide], polydimethylsiloxane segment-containing macro azo compounds, 2,2'-azobis(2,4,4-trimethylpentane), 2,2'-azobis(4-methoxy-2,4-dimethylvaleronitrile), 4,4'-azobis(4-cyanovaleric acid), dimethyl 2,2'-azobisisobutyrate, 2,2'-azobis[2-(2-imidazolin-2-yl)propane] dihydrochloride, 2,2'-azobis[2-(2-imidazolin-2-yl)propane] disulfate dehydrate, 2,2'-azobis[2-(2-imidazolin-2-yl)propane], 2,2'-azobis{2-methyl-N-[1,1-bis(hydroxymethyl)-2-hydroxyeth yl]propionamide}, 2,2'-azobis{2-methyl-N-[1,1-bis(hydroxymethyl)ethyl]propion amide}, 2,2'-azobis[2-methyl-N-(2-hydroxyethyl)propionamide], 2,2'-azobisisobutyramide dihydrate and 2,2'-azobis[2-(hydroxymethyl)propionitrile].

Preferred as the radical polymerization initiator among those mentioned above are organic peroxides which are low in vapor pressure and will not cause the formation of unstable fluoropolymer termini. Among them, peroxydicarbonates, fluorine-based diacyl peroxides and/or fluorine-free diacyl peroxides are preferred since they are readily dissolved in the main component(s) mentioned above in a supercriticality-expression state.

The radical polymerization initiator is preferably used in an amount of 0.001 to 10% by mass relative to the total amount of the radical polymerizable monomer(s). When the radical polymerization initiator is used in an amount smaller than 0.001% by mass, no polymerization will occur, or marked decreases in productivity will result or there will arise a tendency toward the formation of a fluoropolymer having a very high molecular weight, which leads to the formation of defective moldings. On the other hand, levels exceeding 10% by mass will cause marked decreases in molecular weight, with the result that the moldings obtained tend to become unsatisfactory in mechanical strength and wear resistance, among others. They also mean an increase in the cost of the radical polymerization initiator and the strength of moldings tends to decrease. A more preferred lower limit is 0.005% by mass, and a more preferred upper limit is 2% by mass.

In the practice of the present invention, another additive may be added so long as it is inert to the reaction. The other additive is not particularly restricted but may be, for example, a solvent for the radical polymerization initiator (e.g. diethyl carbonate, perfluorohexane, 2,2,3,3-tetrafluoropropylene alcohol).

The fluoropolymer producing method of the present invention can produce fluoropolymers composed of the above-mentioned radical polymerizable monomer(s) as a constituent unit (s) . The fluoropolymers may be in a resin form or in an elastomer form.

The fluoropolymers that can be produced by the fluoropolymer producing method of the present invention are not particularly restricted. Thus, as the above-mentioned resin, there may be mentioned, for example, polytetrafluoroethylene [PTFE], polyvinylidene fluoride [PVdF], polychlorotrifluoroethylene [PCTFE], VdF/TFE copolymers, VdF/TFE/CTFE copolymers, TFE/HFP copolymers [FEP; HFP content not more than 30 mole percent], and TFE/PAVE copolymers [PFA; PAVE content not more than 20 mole percent]. As the above-mentioned elastomer, there may be mentioned VdF/HFP copolymers, VdF/HFP/TFE copolymers, HFP/ET copolymers, HFP/ET/TFE copolymers, HFP/ET/VdF copolymers, HFP/ET/VdF/TFE copolymers, TFE/PAVE copolymers (PAVE content 21 to 50 mole percent), TFE/HFP copolymers (HFP content 31 to 50 mole percent), TFE/propylene copolymers, VdF/CTFE copolymers, and TFE/VdF/propylene copolymers.

The fluoropolymer producing method of the present invention can give fluoropolymers having a high molecular weight with a narrow molecular weight distribution, as described hereinabove, and the polymers obtained have a wide range of applications, for example as molding materials for use in injection molding or extrusion molding, among others, or as materials for the preparation of powder coatings for various lining purposes. For example, they are suitably used as raw material powders for the preparation of organosol coatings which can form uniform and pinhole-free thin films. Such organosol coatings are mainly used as top coatings for metal-made exterior building materials.

The fluoropolymer producing method of the present invention is particularly suited for use in the production of polyvinylidene fluoride [PVdF] and polychlorotrifluoroethylene [PCTFE].

The PVdF obtained by the fluoropolymer producing method of the present invention can be used, for example, in lining of chemical apparatus by powder coating; sheet lining of SUS stainless steel acid cleaning vessels, chromium plating vessels and the like by extrusion molding; lining, for corrosion resistance, of lined pipes likewise by extruding molding; and manufacture of valves, such as diaphragm valves, and pumps by injecting molding and, further, as or in manufacturing electric wire coverings, condenser films, piezoelectric/pyroelectric films, fishing lines and so forth.

The PCTFE obtained by the fluoropolymer producing method of the present invention is suited for use, for example, in those fields of application where low moisture permeability is required, such as packaging materials for drugs and moistureproof films for electroluminescence [EL] devices.

For information, the critical pressures (Pc) and critical temperatures (Tc) of typical radical polymerizable monomers and nonethylenic fluorocarbons are shown below.

| Name of monomer or other substance | Pc (MPa) | Tc (K) | Reference |
|---|---|---|---|
| VdF | 4.430 | 303.30 | 1 |
| HFP | 2.900 | 367.10 | 2 |
| TFE | 3.940 | 306.00 | 3 |
| CTFE | 3.960 | 379.00 | 4 |
| PMVE | 2.803 | 362.33 | 5 |
| PEVE | 2.266 | 394.67 | 5 |
| PPVE | 1.901 | 423.51 | 5 |
| Ethylene | 5.041 | 282.34 | 6 |
| Propylene | 4.600 | 364.90 | 6 |
| Perfluoromethane | 3.745 | 227.51 | 7 |
| Trifluoromethane | 4.836 | 298.97 | 7 |
| Difluoromethane | 5.830 | 351.55 | 8 |
| Perfluoroethane | 3.043 | 293.03 | 9 |
| 1,1,1,2-Tetrafluoroethane | 4.056 | 374.18 | 10 |
| 1,1,1-Trifluoroethane | 3.765 | 345.75 | 11 |
| 1,1-Difluoroethane | 4.516 | 386.41 | 7 |
| Perfluorocyclobutane | 2.773 | 388.37 | 12 |

The references are as follows:
1: Riddick, J. A., Bunger, W. B., Sakano, T. K. "Organic Solvents: Physical Properties and Methods of Purification", 4th Ed., Wiley Interscience, New York (1986).
2: Matheson Company, Inc., "Matheson Gas Data Book", unabridged ed., 4 vols., East Rutherford, New Jersey (1974).
3: Weiss, G., "Hazardous Chemicals Data Book", Noyes Data Corp., Park Ridge, NJ (1986).
4: Engineering Sciences Data, Item 91006, "Vapor Pressures and Critical Points of Liquids. Halogenated Ethylenes", ESDU, London, April (1991).
5: Estimated value (Lydersen method).
6: Tsonopoulos, C., Ambrose, D., "Vapor-Liquid Critical Properties of Elements and Compounds. 6. Unsaturated Aliphatic Hydrocarbons", J. Chem. Eng. Data, 41, 645 (1996).
7: Thermodynamics Research Center, "TRC Thermodynamic Tables, Non-Hydrocarbons", The Texas A&M University System, College Station, TX (1996).
8: Gross, U., Song, Y. W., "Thermal Conductivities of New Refrigerants R125 and R32 Measured by the Transient Hot-Wire Method", Int. J. Thermophys., 17 (3), 607 (1996).
9: Wilson, L. C., Wilding, W. V., Wilson, H. L., Wilson, G. M., "Critical Point Measurements by a New Flow Method and a Traditional Static Method", J. Chem. Eng. Data, 40, 765 (1995).
10: McLinden, M. O., Huber, M. L., Outcalt, S. L., "Thermophysical Properties of Alternative Refrigerants: Status of the HCFs", ASME Winter Annual Meeting, New Orleans, LA - November 28 (1993).
11: Nagel, Bier, K., Int. J. Refrigeration, 19 (4), 264 (1996).
12: Thermodynamics Research Center, "Selected Values of Properties of Chemical Compounds", Data Project, Texas A&M University, College Station, Texas (1983) .

### BEST MODES FOR CARRYING OUT THE INVENTION

The following examples illustrate the present invention. Such examples are, however, by no means limitative of the scope of the present invention.

### Mean polymerization rate

The continuous polymerization was carried out using a polymerization vessel having a known capacity, and the amount of the fluoropolymer obtained in a unit residence time was determined. The fluoropolymer amount was divided by the polymerization vessel volume and the polymerization time, and the quotient was reported as the mean polymerization rate.

### Example 1

After sufficient nitrogen substitution, a 1,083-ml stainless steel autoclave in a vacuum state was charged with vinylidene fluoride [VdF] at a rate of 21.7 g/minute by means of a high-pressure plunger pump, and the pressure in the reaction field was maintained at 6.5 MPa (monomer density ρₘ = 0.60 g/ml, ρₘ/ρ₀ = 1.44) by opening and closing the valve fitted at the bottom of the autoclave. The contents were heated using a band heater under stirring with a magnetic stirrer so that the reaction field temperature (reaction temperature) might amount to 40°C.

Then, a 50% methanol-diluted solution of dinormalpropyl peroxydicarbonate (product of NOF Corp.; Peroyl NPP), employed as an organic peroxide type radical polymerization initiator, was charged into the reaction field at a rate of 0.095 g/minute by means of a syringe pump. The fluoropolymer contained in the fluid discharged through the valve at the bottom of the autoclave was collected by means of a polymer collector equipped with a filter, while the unreacted radical polymerizable monomer contained in the fluid was discharged into the air. The pressure in the reaction field was 6.5 MPa, and the temperature was 40°C. The pressure and temperature conditions in the reaction field were over the critical pressure (4.430 MPa) for VdF occurring singly and the critical temperature (30.15°C) for VdF occurring singly, so that a reaction field in supercritical state was constituted within the meaning defined herein.

The solid product collected in a polymer collector during the steady state period from 120 minutes to 150 minutes after starting the reaction was dried under vacuum at 60°C for 15 hours to give 10.8 g of a white fluoropolymer A. Therefore, the polymer weight per liter of the reaction vessel volume in a steady state was 9.97 g. The mean polymerization rate on that occasion was 20.0 g/(liter·hour), and the residence time was 29.9 minutes.

The white fluoropolymer A was analyzed by size exclusion chromatography [SEC] . As a result, a unimodal molecular weight distribution was obtained, with a number average molecular weight [Mn] = 81,000 on the polystyrene equivalent basis, a weight average molecular weight [Mw] = 203, 000, and Mw/Mn = 2.51. The results are shown in Fig. 1.

### Example 2

After sufficient nitrogen substitution, a 1,083-ml stainless steel autoclave in a vacuum state was charged with vinylidene fluoride [VdF] at a rate of 21.7 g/minute by means of a high-pressure plunger pump, and the pressure in the reaction field was maintained at 6.5 MPa (monomer density ρₘ = 0.60 g/ml, ρₘ/ρ₀ = 1.44) by opening and closing the valve fitted at the bottom of the autoclave. The contents were heated using a band heater under stirring with a magnetic stirrer so that the reaction field temperature (reaction temperature) might amount to 40°C.

Then, a 17.7% diethyl carbonate [DEC]-diluted solution of diethyl peroxydicarbonate [DEPDC], employed as an organic peroxide type radical polymerization initiator, was charged into the reaction field at a rate of 0.225 g/minute by means of a syringe pump. The fluoropolymer contained in the fluid discharged through the valve at the bottom of the autoclave was collected by means of a polymer collector equipped with a filter, while the unreacted radical polymerizable monomer contained in the fluid was discharged into the air. The pressure in the reaction field was 6.5 MPa, and the temperature was 40°C. The pressure and temperature conditions in the reaction field were over the critical pressure (4.430 MPa) for VdF occurring singly and the critical temperature (30. 15°C) for VdF occurring singly, so that a reaction field in supercritical state was constituted within the meaning defined herein.

The solid product collected in a polymer collector during the steady state period from 90 minutes to 120 minutes after starting the reaction was dried under vacuum at 60°C for 15 hours to give 20.7 g of a white fluoropolymer B. Therefore, the polymer weight per liter of the reaction vessel volume in a steady state was 19.1 g. The mean polymerization rate on that occasion was 38.2 g/(liter·hour), and the residence time was 30.0 minutes.

Analysis of the white fluoropolymer B by SEC revealed a unimodal molecular weight distribution, with [Mn] = 134, 000 on the polystyrene equivalent basis, [Mw] = 336,000, and Mw/Mn = 2.52. The results are shown in Fig. 2.

### Comparative Example 1

After sufficient nitrogen substitution, a 219-ml stainless steel autoclave in a vacuum state was charged with vinylidene fluoride [VdF] at a rate of 9.57 g/minute by means of a high-pressure plunger pump, and the pressure in the reaction field was maintained at 6.5 MPa (monomer density ρₘ = 0.60 g/ml, ρₘ/ρ₀ = 1.44) by opening and closing the valve fitted at the bottom of the autoclave. The contents were heated using a band heater under stirring with a magnetic stirrer so that the reaction field temperature (reaction temperature) might amount to 40°C.

Then, a 21.7% diethyl carbonate [DEC]-diluted solution of diethyl peroxydicarbonate [DEPDC], employed as an organic peroxide type radical polymerization initiator, was charged into the reaction field at a rate of 0.10 g/minute by means of a syringe pump. The fluoropolymer contained in the fluid discharged through the valve at the bottom of the autoclave was collected by means of a polymer collector equipped with a filter, while the unreacted radical polymerizable monomer contained in the fluid was discharged into the air. The pressure in the reaction field was 6.5 MPa, and the temperature was 40°C. The pressure and temperature conditions in the reaction field were over the critical pressure (4.430 MPa) for VdF occurring singly and the critical temperature (30.15°C) for VdF occurring singly, so that a reaction field in supercritical state was constituted within the meaning defined herein.

The solid product collected in a polymer collector during the steady state period from 105 minutes to 120 minutes after starting the reaction was dried under vacuum at 60°C for 15 hours to give 1.2 g of a white fluoropolymer C. Therefore, the polymer weight per liter of the reaction vessel volume in a steady state was 5.48 g. The mean polymerization rate on that occasion was 22.0 g/(liter·hour), and the residence time was 14.9 minutes.

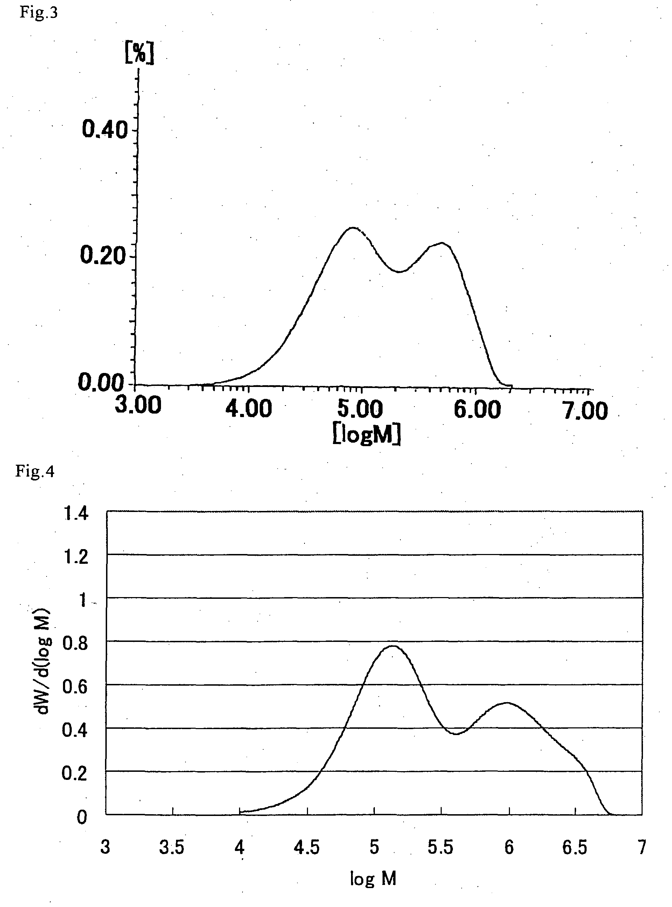

Analysis of the white fluoropolymer C by SEC revealed a bimodal molecular weight distribution, with [Mn] = 75,400 on the polystyrene equivalent basis, [Mw] = 274,000, and Mw/Mn = 3.63. The results are shown in Fig. 3.

### Comparative Example 2

After sufficient nitrogen substitution, a 219-ml stainless steel autoclave in a vacuum state was charged with vinylidene fluoride [VdF] at a rate of 5.48 g/minute by means of a high-pressure plunger pump, and the pressure in the reaction field was maintained at 5.7 MPa (monomer density ρₘ = 0.5 g/ml, ρₘ/ρ₀ = 1.20) by opening and closing the valve fitted at the bottom of the autoclave. The contents were heated using a band heater under stirring with a magnetic stirrer so that the reaction field temperature (reaction temperature) might amount to 40°C.

Then, a 0.42% perfluorohexane-diluted solution of bis(ω-hydrododecafluoroheptanoyl) peroxide [DHP], employed as an organic peroxide type radical polymerization initiator, was charged into the reaction field at a rate of 0.128 g/minute by means of a syringe pump. The fluoropolymer contained in the fluid discharged through the valve at the bottom of the autoclave was collected by means of a polymer collector equipped with a filter, while the unreacted radical polymerizable monomer contained in the fluid was discharged into the air. The pressure in the reaction field was 5.7 MPa, and the temperature was 40°C. The pressure and temperature conditions in the reaction field were over the critical pressure (4.430 MPa) for VdF occurring singly and the critical temperature (30.15°C) for VdF occurring singly, so that a reaction field in supercritical state was constituted within the meaning defined herein.

The solid product collected in a polymer collector during the steady state period from 100 minutes to 120 minutes after starting the reaction was dried under vacuum at 60°C for 15 hours to give 0.298 g of a white fluoropolymer D. Therefore, the polymer weight per liter of the reaction vessel volume in a steady state was 1.36 g. The mean polymerization rate on that occasion was 4.08 g/(liter·hour), and the residence time was 20.0 minutes.

Analysis of the white fluoropolymer D by SEC revealed a bimodal molecular weight distribution, with a number average molecular weight [Mn] =145,000 on the polystyrene equivalent basis, a weight average molecular weight [Mw] = 691,000, and Mw/Mn = 4.77. The results are shown in Fig. 4.

### Example 3

A while fluoropolymer E (0.538 g) was obtained in the same manner as in Comparative Example 2 except that diethyl carbonate was fed, as a chain transfer agent, to the reaction field at a rate of 0. 0921 g/minute by means of a syringe pump. Therefore, the polymer weight per liter of the reaction vessel volume in a steady state was 2.46 g. The mean polymerization rate on that occasion was 7.4 g/(liter·hour), and the residence time was 19.9 minutes.

Analysis of the white fluoropolymer E by SEC revealed a unimodal molecular weight distribution, with a number average molecular weight [Mn] = 171,000 on the polystyrene equivalent basis, a weight average molecular weight [Mw] = 302,000, and Mw/Mn = 1.77. The results are shown in Fig. 5.

### Example 4

A white fluoropolymer F (0.933 g) was obtained in the same manner as in Example 3 except that acetone was fed, as a chain transfer agent, to the reaction field at a rate of 0.0224 g/minute by means of a syringe pump. Therefore, the polymer weight per liter of the reaction vessel volume in a steady state was 4.26 g. The mean polymerization rate on that occasion was 12.8 g/(liter·hour), and the residence time was 20.0 minutes.

Analysis of the white fluoropolymer F by SEC revealed a unimodal molecular weight distribution, with a number average molecular weight [Mn] = 179,000 on the polystyrene equivalent basis, a weight average molecular weight [Mw] = 383,000, and Mw/Mn = 2.14. The results are shown in Fig. 6.

### Example 5

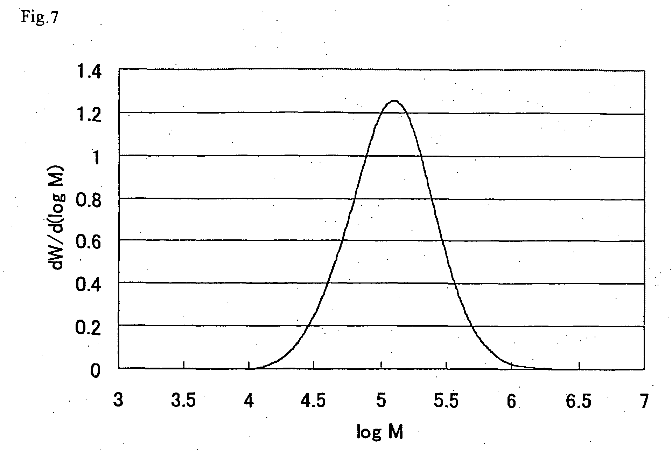

A white fluoropolymer G (0.178 g) was obtained in the same manner as in Example 3 except that diethyl malonate [DEM] was fed, as a chain transfer agent, to the reaction field at a rate of 0.0159 g/minute by means of a syringe pump. Therefore, the polymer weight per liter of the reaction vessel volume in a steady state was 0.812 g. The mean polymerization rate on that occasion was 2.4 g/ (liter·hour), and the residence time was 20. 3 minutes. Analysis of the white fluoropolymer G by SEC revealed a unimodal molecular weight distribution, with a number average molecular weight [Mn] =171,000 on the polystyrene equivalent basis, a weight average molecular weight [Mw] = 302,000, and Mw/Mn = 1.74. The results are shown in Fig. 7.

### INDUSTRIAL APPLICABILITY

The fluoropolymer producing method of the present invention, which has the constitution described hereinabove, can give fluoropolymers with a high molecular weight and a narrow molecular weight distribution, when carried out in a continuous polymerization in a supercriticality-expression state while maintaining the fluoropolymer concentration at a certain level or higher.

## Claims

1. A fluoropolymer producing method
which comprises polymerizing a radical polymerizable monomer in a manner of continuous polymerization in a defined reaction-field to give the fluoropolymer,
wherein said defined reaction-field is in a supercriticality-expression state and under a pressure of not higher than 40 MPa and a temperature of not higher than that higher by 100°C than the supercriticality-expression temperature of the defined reaction-field,
said radical polymerizable monomer comprises a fluorine-containing ethylenic monomer, and
said fluoropolymer has a weight average molecular weight [Mw] of not lower than 150,000 as determined on the polystyrene equivalent basis and
a ratio [Mw/Mn] of the weight average molecular weight [Mw] on the polystyrene equivalent basis to a number average molecular weight [Mn] of the fluoropolymer on the polystyrene equivalent basis is higher than 1 but not higher than 3.

2. A fluoropolymer producing method
which comprises polymerizing a radical polymerizable monomer in a manner of continuous polymerization in a defined reaction-field in the presence of carbon dioxide to give the fluoropolymer,
wherein said defined reaction-field is in a supercriticality-expression state,
said radical polymerizable monomer comprises a fluorine-containing ethylenic monomer,
said carbon dioxide amounts to at most equimolar to said radical polymerizable monomer, and
said fluoropolymer has a weight average molecular weight [Mw] of not lower than 150, 000 as determined on the polystyrene equivalent basis and
a ratio [Mw/Mn] of the weight average molecular weight [Mw] on the polystyrene equivalent basis to a number average molecular weight [Mn] of the fluoropolymer on the polystyrene equivalent basis is higher than 1 but not higher than 3.

3. The fluoropolymer producing method according to claim 2,
wherein said defined reaction-field further is under a pressure of not higher than 40 MPa and a temperature of not higher than that higher by 100°C than the supercriticality-expression temperature of said defined reaction-field.

4. The fluoropolymer producing method according to claim 1, 2 or 3,
wherein said defined reaction-field has a ratio [ρₘ/ρ₀] of not lower than 1.1, the ratio [ρₘ/ρ₀] is of a monomer density [ρₘ] of a monomer critical density [ρ₀].

5. The fluoropolymer producing method according to claim 1, 2, 3 or 4,
wherein the polymerization of the radical polymerizable monomer is carried out in the presence of a chain transfer agent.

6. The fluoropolymer producing method according to claim 5,
wherein the continuous polymerization is carried in a condition that an amount of the fluoropolymer in a reaction vessel amounts to at least 8 g per liter of the capacity of said reaction vessel in a steady state.

7. The fluoropolymer producing method according to claim 1, 2, 3, 4, 5 or 6,
wherein the fluorine-containing ethylenic monomer comprises at least one species selected from the group consisting of vinylidene fluoride, tetrafluoroethylene, chlorotrifluoroethylene and hexafluoropropylene.

8. The fluoropolymer producing method according to claim 1, 2, 3, 4, 5 or 6,
wherein the fluorine-containing ethylenic monomer comprises vinylidene fluoride.

9. The fluoropolymer producing method according to claim 1, 2, 3, 4, 5, 6, 7 or 8,
wherein the polymerization of the radical polymerizable monomer is carried out in the presence of a radical polymerization initiator.

10. The fluoropolymer producing method according to claim 9,
wherein the radical polymerization initiator is an organic peroxide.

11. The fluoropolymer producing method according to claim 10,
wherein the organic peroxide comprises a peroxydicarbonate, a fluorine-based diacyl peroxide and/or a fluorine-free diacyl peroxide.

12. The fluoropolymer producing method according to claim 1, 2, 3, 4, 5, 6, 7, 8, 9, 10 or 11,
wherein the polymerization of the radical polymerizable monomer is carried out in the presence of a nonethylenic fluorocarbon.
